# EUROPÄISCHE PATENTSCHRIFT

(11) **EP 2 706 424 B1**
(45) Veröffentlichungstag und Bekanntmachung des Hinweises auf die Patenterteilung: **06.11.2019**
(21) Anmeldenummer: 13004351.6
(22) Anmeldetag: 05.09.2013
(51) Int. Cl.: G05D 7/06, G05D 16/20, F16K 31/08, F16K 31/00

(54) **Vorrichtung zur Druck- und/oder Massenstromregelung für einen Raumfahrtantrieb**
Device for determining the pressure and/or mass flow regulation for a spacecraft propulsion unit
Dispositif de régulation de la pression et/ou du débit massique pour un entraînement spatial

(30) Priorität: 05.09.2012 DE 102012017501
(43) Veröffentlichungstag der Anmeldung: 12.03.2014
(73) Patentinhaber: ArianeGroup GmbH, 82024 Taufkirchen (DE)
(72) Erfinder: Maier, Thomas, 74348 Lauffen (DE)
(74) Vertreter: Schicker, Silvia

(56) Entgegenhaltungen:
- DE-A1-102006 013 538
- US-A- 4 848 393
- US-A1- 2010 116 368
- US-B1- 6 223 774

## Beschreibung

Die Erfindung betrifft eine Vorrichtung zur Druck- und/oder Massenstromregelung eines durch eine Leitung förderbaren, gasförmigen oder flüssigen Fluids, insbesondere für einen Raumfahrtantrieb.

Zur Druck- bzw. Durchflussregulierung von Gasen oder flüssigen Medien werden bei einem Raumfahrtantrieb in der Regel mechanische Druckregler eingesetzt. Die Einstellung eines Arbeitspunktes, wie z.B. einem Regeldruck, erfolgt bei der Fertigung des mechanischen Druckreglers. Beim Einsatz eines solchen Druckreglers in Raumfahrtanwendungen erfolgt die Fertigung der Komponenten häufig Monate oder sogar Jahre vor dem Start der Raumfahrtkomponente. Spätere Änderungen des Arbeitspunktes, insbesondere wenn sich die Raumfahrtkomponente bereits im Orbit befindet, sind nicht mehr oder nur unter großem Aufwand möglich.

US 6,223,774 B1 offenbart eine redundante Regelventilanordnung mit zwei parallel verlaufenden Leitungen, die jeweils mit in Serie geschalteten Absperr- und Regelventilen versehen sind. US 2010/0116368 A1 offenbart eine Regelventilanordnung mit zwei Leitungen, die mit vier Regelventilen versehen sind.

Es ist Aufgabe der vorliegenden Erfindung, eine Vorrichtung zur Druck- und/oder Massenstromregelung anzugeben, welche baulich und/oder funktionell verbessert ist.

Diese Aufgabe wird gelöst durch eine Vorrichtung gemäß den Merkmalen des Patentanspruches 1. Vorteilhafte Ausgestaltungen sind in den abhängigen Patentansprüchen wiedergegeben.

Es wird eine Vorrichtung zur Druck- und/oder Massenstromregelung eines durch eine Leitung förderbaren, gasförmigen oder flüssigen Fluids vorgeschlagen. Eine solche Vorrichtung kann z.B. in Raumfahrtantrieben verschiedenster Art zum Einsatz kommen, um die Druckversorgung der zu fördernden Medien oder zur Regulierung von Massenströmen der Medien zu bewerkstelligen.

Zur Druck- und/oder Massenstromregelung des Fluids ist eine Kombination aus einem ersten, piezoelektrisch ansteuerbaren Regelventil und zumindest zwei zweiten, magnetisch ansteuerbaren Regelventilen vorgesehen. Die Regelventile sind derart miteinander und mit einem Leitungseingang verschaltet, dass in einem Nominalbetrieb der Druck und der Massenstrom des Fluids in der Leitung durch das zumindest eine erste Regelventil einstellbar und eine Verbindung oder Isolation des ersten Regelventils mit oder von dem Leitungseingang durch die zweiten Regelventile herstellbar ist. In einem Notbetrieb sind der Druck und der Massenstrom des Fluids in der Leitung durch die zweiten Regelventile einstellbar.

Die Vorrichtung kann generell in all solchen Bereichen zum Einsatz kommen, bei denen hohe Drücke am Leitungseingang zu niederen Drücken an einem Leitungsausgang durch die Vorrichtung zu reduzieren sind.

Im Gegensatz zu den aus dem Stand der Technik bekannten mechanischen Druckreglern basiert die Vorrichtung auf einer elektrischen Steuerung einer Mehrzahl an Ventilen. Die Druck- und/oder Massenstromregelung des zu fördernden Fluids erfolgt mittels einer Kombination von Magnet- und Piezoventilen. Der Erfindung liegt die Überlegung zugrunde, die Magnetventile sowohl zur Regelung als auch zur Absperrung einzusetzen.

Ein Vorteil der Vorrichtung besteht darin, dass die Einstellung des Arbeitspunktes, z.B. ein Regeldruck, per Software zu einem späteren Zeitpunkt erfolgen kann. Im Extremfall kann die Einstellung des Arbeitspunktes beim Einsatz der Vorrichtung in einem Raumfahrtantrieb sogar im Orbit erfolgen. Durch die Möglichkeit, den Arbeitspunkt zu verändern, können verschiedene Anwendungen realisiert werden. Beispielsweise kann die Vorrichtung in der Druckversorgung von elektrischen, chemischen oder Kaltgasantriebssystemen oder zur Massenstromregelung in elektrischen Antriebssystemen eingesetzt werden.

Ein weiterer Vorteil der Vorrichtung besteht darin, dass durch die hohe Dichtigkeit, die durch die Magnetventile erreicht wird, die Betriebszeit im Orbit erheblich - eventuell bis zu einem Missionsende - verlängert werden kann. Gegenüber herkömmlichen Vorrichtungen weist die vorgeschlagene Vorrichtung einen längeren und effizienteren Betrieb auf, was für einen Betreiber eines Raumfahrtgeräts ein wirtschaftlicher Faktor ist. Dies resultiert daraus, dass bei einer herkömmlichen Vorrichtung mechanische Regler nach erfolgter Positionierung einer Raumfahrtkomponente im Orbit dauerhaft isoliert werden und ein restlicher Treibstoff mit dem Restdruck im Tank ausgefördert wird. Daraus resultiert, dass der Raumfahrtantrieb nicht an den optimalen Arbeitspunkten betrieben wird und dadurch einen schlechteren Wirkungsgrad hat.

Darüber hinaus kann bei Anomalien des Raumfahrtantriebs im Orbit korrigierend eingegriffen werden.

Insbesondere ist es möglich, die Vorrichtung in einen Notbetrieb zu überführen, um auch beim Ausfall des an sich für die Druck- und/oder Massenstromregelung eingesetzten piezoelektrischen Regelventils die Regelung mittels der Magnetventile sicherzustellen. Im Normalbetrieb lässt sich die Vorrichtung präzise mittels des piezoelektrischen Regelventils regeln, da diese eine proportionale Öffnungscharakteristik aufweisen. Eine solche präzise Regelung ist im Notbetrieb durch Nutzung der Magnetventile zwar nicht möglich, da diese keine proportionale Öffnungscharakteristik aufweisen. Stattdessen können diese lediglich geöffnet oder geschlossen werden. Nichtsdestotrotz kann bei einer Störung ein Notbetrieb aufrechterhalten werden.

In einer ersten Variante ist eines der zweiten Regelventile seriell mit dem ersten Regelventil zwischen dem Leitungseingang und dem Regelventil verschaltet. Ein anderes der zweiten Regelventile ist parallel zu dem ersten Regelventil verschaltet. Diese Ausgestaltungsvariante ermöglicht eine "Umgehung" des ersten Regelventils, wenn dieses sich beispielsweise nicht mehr öffnen lässt. Andererseits kann bei bestimmungsgemäßer Isolierung der Vorrichtung von dem Leitungseingang (d.h. einer verbrauchenden Komponente wird kein Fluid zugeführt) die Dichtigkeit der Vorrichtung durch die serielle Verschaltung eines zweiten Regelventils zu dem ersten Regelventil erzielt erhöht werden.

In einer anderen Variante ist eines der zweiten Regelventile seriell mit dem ersten Regelventil zwischen dem Leitungseingang und dem Regelventil verschaltet. Ein anderes der zweiten Regelventile ist parallel zu der Serienschaltung aus dem ersten Regelventil und dem einen der zweiten Regelventile verschaltet. Diese Variante ermöglicht es, ein sich nicht mehr Schließen lassendes erstes Regelventil durch das seriell verschaltete zweite Regelventil von dem Leitungseingang zu trennen und eine Verbindung zwischen dem Leitungseingang und einem Leitungsausgang durch das parallel geschaltete zweite Regelventil vorzunehmen.

Gemäß einer zweiten Ausgestaltungsvariante sind das erste und die zumindest zwei zweiten Regelventile einer Regulationseinheit zugeordnet. Die Regulationseinheit ist über eine Versorgungseinheit mit dem Leitungseingang verschaltet. Die Versorgungseinheit weist zumindest ein drittes, magnetisch ansteuerbares Regelventil zur Verbindung oder Trennung der Regulationseinheit mit dem Leitungseingang auf. Durch das Vorsehen der Versorgungseinheit zwischen dem Leitungseingang und der Regulationseinheit, welche gemäß den oben beschriebenen Varianten ausgeführt sein kann, kann die Dichtigkeit der Vorrichtung bei erwünschter Trennung der Regulationseinheit von dem Leitungseingang verbessert werden.

Um auch im Fall des Defekts eines dritten Regelventils der Versorgungseinheit eine hohe Dichtigkeit der Vorrichtung gewährleisten zu können, ist es zweckmäßig, wenn die Versorgungseinheit zumindest zwei seriell miteinander verschaltete drittel Regelventile umfasst.

In einer weiteren Ausgestaltung weist die Reguliereinheit einen ersten Ventilstrang und zumindest einen zweiten, dazu parallel geschalteten Ventilstrang mit jeweils den ersten und zweiten Regelventilen auf. Der erste Ventilstrang stellt einen Primärzweig, der zumindest eine zweite, dazu parallel geschaltete Ventilstrang einen redundanten Zweig dar. Somit kann auch beim Ausfall eines kompletten Ventilstrangs die Funktionssicherheit der Vorrichtung sichergestellt werden.

Hierzu korrespondierend ist es zweckmäßig, wenn die Versorgungseinheit einen dritten Ventilstrang und zumindest einen vierten, dazu parallel geschalteten Ventilstrang mit jeweils dem oder den dritten Regelventilen aufweist. Der dritte Ventilstrang stellt hier den Primärzweig, der zumindest eine vierte, dazu parallel geschaltete Ventilstrang einen redundanten Zweig dar.

Die Anzahl der redundanten Zweige in der Reguliereinheit und/oder der Versorgungseinheit kann entsprechend der erwünschten Ausfallsicherheit der Vorrichtung gewählt werden.

Ebenso ist es gemäß einer Ausgestaltung möglich, den ersten und den zweiten Ventilstrang der Reguliereinheit in identischer Weise oder in unterschiedlicher Verschaltung der ersten und zweiten Regelventile auszubilden. Dabei kommen insbesondere die oben beschriebenen beiden Ausgestaltungsvarianten in Betracht.

Es ist weiterhin zweckmäßig, wenn das erste und die zumindest zwei zweiten Regelventile durch eine Steuereinheit ansteuerbar sind. Die Steuereinheit beinhaltet eine Treiberelektronik, die Soll- und Istwerte des Drucks in der Leitung miteinander verrechnet und daraus die Ansteuerung der verschiedenen Regelventile errechnet und vornimmt. Insbesondere kann hierbei vorgesehen sein, dass der Steuereinheit zur Steuerung der Regelventile der Vorrichtung Soll- und Messwerte des Drucks und/oder des Massenstroms des Fluids zuführbar sind.

Die Erfindung wird nachfolgend näher anhand von Ausführungsbeispielen in der Zeichnung erläutert. Es zeigen:
- Fig. 1: ein erstes Ausführungsbeispiel einer erfindungsgemäßen Vorrichtung zur Druck- und/oder Massenstromregelung, und
- Fig. 2: ein zweites Ausführungsbeispiel einer redundanten Vorrichtung zur Druck- und/oder Massenstromregelung.

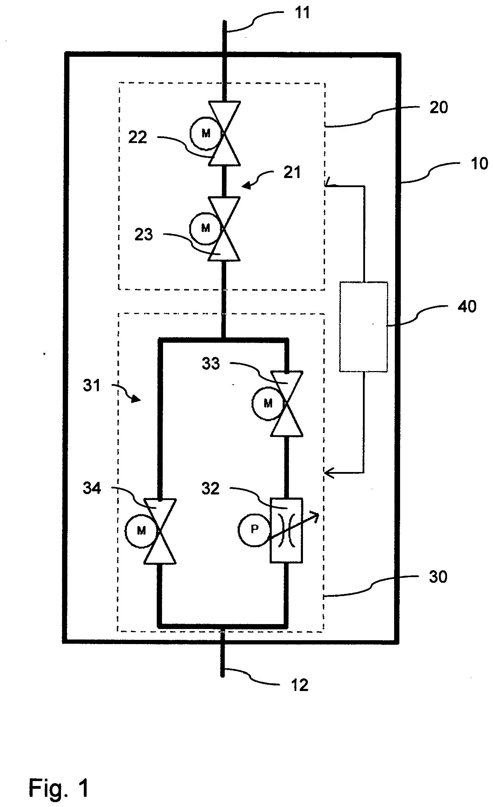

Fig. 1 zeigt ein erstes Ausführungsbeispiel einer erfindungsgemäßen Vorrichtung 10 zur Druck- und/oder Massenstromregelung. Die Vorrichtung 10 umfasst einen Leitungseingang 11, welcher beispielsweise über eine nicht dargestellte Leitung oder ein Leitungssystem mit einem ebenfalls nicht dargestellten Fluidreservoir verbunden ist. Aus dem Fluidreservoir wird dem Leitungseingang 11 ein gasförmiges oder flüssiges Fluid mit einem Eingangsdruck zugeführt. An einem Leitungsausgang 12, welcher beispielsweise direkt oder über weitere, nicht dargestellte Komponenten, mit einem ebenfalls nicht näher dargestellten Raumfahrtantrieb gekoppelt ist, wird das Fluid mit einem gegenüber dem Eingangsdruck verringerten Ausgangsdruck bereitgestellt. Mittels der Vorrichtung 10 wird der Druck und/oder der Massenstrom des Fluids auf den bestimmungsgemäßen Wert am Leitungsausgang geregelt.

Funktional umfasst die Vorrichtung 10 neben einer Steuereinheit 40 eine Regulationseinheit 30 sowie eine Versorgungseinheit 20.

Die Versorgungseinheit 20, welche mit dem Leitungseingang 11 verbunden ist, dient zum Verbinden oder Trennen der Regulationseinheit 30 mit dem Leitungseingang 11. Hauptaufgabe der Regulationseinheit 30 besteht in der Regulierung des Drucks. Die Steuereinheit 40 beinhaltet eine Treiberelektronik zur Ansteuerung der nachfolgend näher beschriebenen Komponenten der Versorgungseinheit 20 sowie der Regulationseinheit 30. Insbesondere werden der Steuereinheit 40 Soll- und Istwerte des in der mit dem Leitungseingang 11 verbundenen Leitung anliegenden Drucks, des in der mit dem Leitungsausgang 12 verbundenen Leitung anliegenden Drucks sowie der Zustände der Reglerventile der Versorgungseinheit 20 und der Regulationseinheit 30 anliegenden Werte zugeführt und miteinander verrechnet. Hieraus werden Ansteuerwerte für die Reglerventile der Versorgungseinheit 20 und der Regulationseinheit 30 ermittelt.

Die Regulationseinheit 30 umfasst neben einem piezoelektrisch ansteuerbaren Regelventil 32 zumindest zwei magnetisch ansteuerbare Regelventile 33, 34. Das piezoelektrisch ansteuerbare Regelventil 32 wird nachfolgend auch als Piezoregelventil bezeichnet. Die magnetisch ansteuerbaren Regelventile 33, 34 werden als Magnetventil bezeichnet. Die magnetisch ansteuerbaren Regelventile 33, 34 stellen Absperr- und Regelventile dar. In der in Fig. 1 dargestellten Ausgestaltung sind das Piezoregelventil 32 und das Magnetventil 33 seriell miteinander verschaltet. Parallel zu der Serienschaltung der Regelventile 32, 33 ist das Magnetventil 34 verschaltet. Dieser mit dem Bezugszeichen 31 gekennzeichnete Ventilstrang ist zwischen der Versorgungseinheit 20 und dem Leitungsausgang 12 verschaltet.

Die Versorgungseinheit 20 umfasst zwei seriell miteinander verschaltete Magnetventile 22, 23. Die Serienschaltung der beiden Regelventile 22, 23 stellt einen Ventilstrang 21 dar, der zwischen dem Leitungseingang 11 und der Regulationseinheit 30 verschaltet ist. Die seriell miteinander verschalteten Magnetventile 22, 23 sowie deren serielle Verschaltung mit der Regulationseinheit 30 ermöglichen eine Erhöhung der Dichtheit der Vorrichtung, insbesondere des für die Regulierung des Drucks vorgesehenen Piezoventils 32.

Die in Fig. 1 gezeigte Verschaltung der Regelventile 32, 33, 34 der Regulationseinheit 30 ermöglicht in einem Nominalbetrieb die Einstellung des Drucks bzw. Massenstroms des Fluids durch das Piezoregelventil 32. Im Nominalbetrieb der Vorrichtung 10 sind (durch entsprechende Ansteuerung durch die Steuereinheit 40) die Magnetventile 22, 23 und 33 geöffnet, während das Magnetventil 34 geschlossen ist. Die präzise Regulierung des Drucks bzw. Massenstroms erfolgt durch Ansteuerung des Piezoregelventils 32. Im Nominalbetrieb wird somit die stetige Regelung des Piezoregelventils zur Erlangung einer präzisen Regelqualität genutzt. Insbesondere ist es möglich, den Arbeitspunkt der Vorrichtung, d.h. einen gewünschten Regeldruck bzw. Massenstrom, zu jedem beliebigen Zeitpunkt in gewünschter Weise einzustellen.

In einem Notbetrieb kann der Druck des Massenstroms mit verringerter Regelqualität durch das Magnetventil 34 eingestellt werden, wobei über das Magnetventil 33 eine Abkopplung des dann defekten Piezoregelventils 32 von dem Leitungseingang 11 erfolgt. Grundsätzlich sind folgende vier Fehlerfälle beim Betrieb der Vorrichtung 10 denkbar:
1. Das Piezoregelventil öffnet nicht.
2. Das Piezoregelventil schließt nicht.

Im Fehlerfall 1, bei dem das Piezoregelventil 32 nicht öffnet, wird das Piezoregelventil 32 durch Schließen des Magnetventils 33 vom Leitungseingang 11 isoliert. Durch Öffnen des Magnetventils 34 erfolgt ein Notregelbetrieb.

Im Fehlerfall 2, in dem sich das Piezoregelventil 32 entgegen einer erwünschten Ansteuerung nicht schließt, wird das Magnetregelventil 32 durch Schließen des Magnetventils 33 isoliert. Es erfolgt ein Notregelbetrieb mit dem Magnetventil 34.

Wird durch die Vorrichtung 10 eine Druckregelung gewünscht, so verbleiben die Magnetventile 22, 23 der Versorgungseinheit 20 geöffnet.

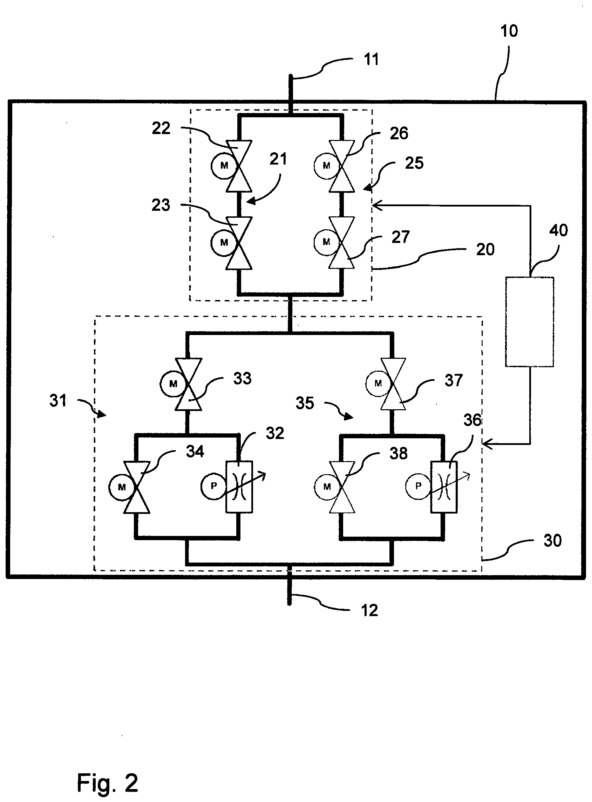

Fig. 2 zeigt ein zweites Ausführungsbeispiel einer redundanten Vorrichtung 10 zur Druck- und/oder Massenstromregelung. Dabei umfassen sowohl die Versorgungseinheit 20 als auch die Regulationseinheit 30 jeweils zwei Ventilstränge 21, 25 bzw. 31, 35, von denen einer (21 bzw. 31) als Primärzweig und der andere (25 bzw. 35) als redundanter Zweig dient.

In der Versorgungseinheit umfasst der redundante Zweig 25 in Entsprechung zum Primärzweig 21 zwei seriell miteinander verschaltete Magnetventile 26, 27. Der Primärzweig 21 sowie der redundante Zweig 25 sind einander parallel geschaltet.

In der Regulationseinheit 30 sind ebenfalls zwei parallel geschaltete Ventilstränge 31, 35 gezeigt. Dabei könnten diese die in Fig. 1 gezeigte Verschaltung aufweisen. Fig. 2 zeigt eine hierzu mögliche Alternative, bei der das Piezoregelventil 32 bzw. 36 parallel zu einem Magnetventil 34 bzw. 38 verschaltet ist. Die Parallelschaltung aus den Regelventilen 32, 34 bzw. 36, 38 ist mit einem Magnetventil 33, 37 seriell verschaltet. Die beiden parallel geschalteten Zweige 31, 35 sind in der oben beschriebenen Weise zwischen der Versorgungseinheit 20 und dem Leitungsausgang 12 verschaltet.

In einer weiteren, nicht dargestellten Abwandlung könnten die Ventilstränge 31, 35 der Vorrichtung gemäß Fig. 2 auch in unterschiedlicher Weise ausgebildet sein. So könnte beispielsweise der Ventilstrang 31 wie in Fig. 1 dargestellt und der Ventilstrang 35 wie in Fig. 2 dargestellt ausgebildet sein.

Grundsätzlich sind folgende vier Fehlerfälle beim Betrieb der Vorrichtung 10 denkbar:
1. Das Piezoregelventil öffnet nicht.
2. Das Piezoregelventil schließt nicht.
3. Eines der Magnetventile öffnet nicht.
4. Eines der Magnetventile schließt nicht.

Die Fehlerfälle werden durch entsprechende Ansteuerung der Regelventile ausgeglichen. In den nachfolgend beschriebenen Fehlerfällen wird durch die Nutzung von Redundanzen trotz des aufgetretenen Fehlers eine gleichbleibende Regelqualität erzielt. Ein "Notbetrieb" wird über eine nicht stetige Regelung über eines der Magnetventile mit Qualitätsverlusten kompensiert. Im Nominalbetrieb der Vorrichtung 10 wird eine stetige Regelung durch die Piezoregelventile 32, 36 genutzt, um die hohe Regelqualität zu erreichen. In der nachfolgenden Beschreibung wird davon ausgegangen, dass bis zum Eintreten des Fehlerfalls die jeweiligen Primärzweige 21 sowie 31 der Versorgungseinheit 20 und der Regulationseinheit aktiv sind, während die redundanten Zweige 25, 35 inaktiv sind.

Im Fehlerfall 1, bei dem das Piezoregelventil 32 des Primärzweigs 31 nicht mehr öffnet, wird der Primärzweig durch das Schließen der Magnetventile 33, 34 vom Leitungseingang 11 isoliert. Durch das Öffnen des Magnetventils 37 und Ansteuerung des Piezoregelventils 36 erfolgt eine Umschaltung auf den redundanten Zweig 35, wodurch die hohe Regelgüte erhalten bleibt.

Im Fehlerfall 2, in dem das Piezoregelventil 32 des Primärzweigs 31 nicht mehr schließt, erfolgt eine Isolation des Piezoregelventils 32 durch das Schließen der Magnetventile 33, 34. Es erfolgt eine Umschaltung auf den parallelen Regelzweig 35, wobei das Magnetventil 37 geöffnet und das Magnetventil 38 geschlossen wird. Die Regelung erfolgt durch Ansteuerung des Piezoregelventils 36.

In einem Fehlerfall, in dem beide Piezoregelventile 32, 36 des Primärzweigs 31 und des redundanten Zweigs 35 nicht mehr öffnen (d.h. auch der redundante Zweig 35 arbeitet nicht bestimmungsgemäß), wird der redundante Zweig 35 von dem Leitungseingang 11 isoliert, indem die Magnetventile 37, 38 geschlossen werden. Es erfolgt ein Notregelbetrieb über die Magnetventile 33, 34 des Primärzweigs 31. Es versteht sich, dass ebenso eine Isolation des Primärzweigs 31 von dem Leitungseingang 11 und ein Notregelbetrieb über die Magnetventile des redundanten Zweigs erfolgen könnte.

Im Fehlerfall, in dem die Piezoregelventile 32, 36 sowohl des Primärzweigs 31 als auch des redundanten Zweigs 35 nicht mehr schließen, erfolgt eine Isolation des Piezoregelventils eines der Zweige, beispielsweise des redundanten Zweigs 35, durch Schließen der Magnetventile 37, 38. Nach dem Öffnen des Magnetventils 34 des Primärzweigs 31 kann ein Notregelbetrieb durch Ansteuerung des Magnetventils 33 erfolgen. Das Fluid kann dann sowohl durch das geöffnete Magnetventil als auch durch das sich nicht mehr schließen lassende Piezoregelventil 32 fließen.

Beim Ausfall eines der Versorgungszweige erfolgt eine Isolation des defekten Ventilzweigs unter Umschalten auf den parallelen Versorgungszweig.

Die Vorrichtung ist durch das Arrangement von verschiedenen Magnet- und Piezoregelventilen, verbunden mit einer entsprechenden elektronischen Ansteuerung durch eine Steuereinheit in der Lage, Drücke und Massenströme präzise zu regeln. Aus der Kombination von einfachen, zuverlässigen Magnetventilen und präzise regulierbaren Piezoregelventilen resultieren eine hohe Regelpräzision und eine zuverlässige Dichtigkeit des Systems im Nominalfall.

Je nach den Bedürfnissen des zu bedrückenden oder zu regelnden Systems können der Steuereinheit entsprechende Regelparameter, wie z.B. Drücke oder Massenströme, vorgegeben werden. Dabei können verschiedenste Fehlerszenarien über eingebaute Redundanzen oder Notbetriebe kompensiert werden, was einen Totalausfall der Regelung erheblich reduziert.

Die Vorrichtung kann durch die vielseitige Verwendbarkeit und Parametrierung, die bei einer Raumfahrtanwendung sogar während einer Mission noch verändert werden kann, als Alternative zu den üblichen mechanischen Reglern verwendet werden.

Ebenso könnte die Vorrichtung auch in anderen industriellen Bereichen Anwendung finden.

### BEZUGSZEICHENLISTE

- 10: Vorrichtung zur Druck- und/oder Massenstromregelung
- 11: Leitungseingang
- 12: Leitungsausgang
- 20: Versorgungseinheit
- 21: dritter Ventilstrang / Primärzweig
- 22: magnetisch ansteuerbares Regelventil
- 23: magnetisch ansteuerbares Regelventil
- 25: dritter Ventilstrang / redundanter Zweig
- 26: magnetisch ansteuerbares Regelventil
- 27: magnetisch ansteuerbares Regelventil
- 30: Regulationseinheit
- 31: erster Ventilstrang / Primärzweig
- 32: piezoelektrisch ansteuerbares Regelventil/ Piezoregelventil
- 33: magnetisch ansteuerbares Regelventil/ Magnetventil
- 34: magnetisch ansteuerbares Regelventil
- 35: erster Ventilstrang / Primärzweig
- 36: piezoelektrisch ansteuerbares Regelventil
- 37: magnetisch ansteuerbares Regelventil
- 38: magnetisch ansteuerbares Regelventil
- 40: Steuereinheit

## Patentansprüche

1. Vorrichtung zur Druck- und/oder Massenstromregelung eines durch eine Leitung förderbaren, gasförmigen oder flüssigen Fluids, insbesondere für einen Raumfahrtantrieb, wobei zur Druck- und/oder Massenstromregelung des Fluids eine Kombination aus einem ersten, piezoelektrisch ansteuerbaren Regelventil (32; 38) und zumindest zwei zweiten, magnetisch ansteuerbaren Regelventilen (22, 23, 33, 34; 26, 27, 36, 37) vorgesehen ist, wobei die Regelventile (32, 38; 22, 23, 33, 34; 26, 27, 36, 37) derart miteinander und mit einem Leitungseingang (11) verschaltet sind, dass in einem Nominalbetrieb der Druck und der Massenstrom des Fluids durch das zumindest eine erste Regelventil einstellbar und eine Verbindung oder Isolation des ersten Regelventils (32; 38) mit oder von dem Leitungseingang (11) durch die zweiten Regelventile (22, 23, 33, 34; 26, 27, 36, 37) herstellbar ist, und wobei in einem Notbetrieb der Druck und der Massenstrom des Fluids durch die zweiten Regelventile einstellbar ist.

2. Vorrichtung nach Anspruch 1, **dadurch gekennzeichnet, dass** eines der zweiten Regelventile (22, 23, 33, 34; 26, 27, 36, 37) seriell mit dem ersten Regelventil (32, 38) zwischen dem Leitungseingang (11) und dem Regelventil (32, 38) verschaltet ist und ein anderes der zweiten Regelventile (22, 23, 33, 34; 26, 27, 36, 37) parallel zu dem ersten Regelventil (32; 38) verschaltet ist.

3. Vorrichtung nach Anspruch 1, **dadurch gekennzeichnet, dass** eines der zweiten Regelventile (22, 23, 33, 34; 26, 27, 36, 37) seriell mit dem ersten Regelventil (32, 38) zwischen dem Leitungseingang (11) und dem Regelventil (32, 38) verschaltet ist und ein anderes der zweiten Regelventile (22, 23, 33, 34; 26, 27, 36, 37) parallel zu der Serienschaltung aus dem ersten Regelventil (32;38) und dem einem der zweiten Regelventile (22, 23, 33, 34; 26, 27, 36, 37) verschaltet ist.

4. Vorrichtung nach einem der vorhergehenden Ansprüche, **dadurch gekennzeichnet, dass** das erste und die zumindest zwei zweiten Regelventile (32, 38; 22, 23, 33, 34; 26, 27, 36, 37) einer Regulationseinheit (30) zugeordnet sind, wobei die Regulationseinheit (30) über eine Versorgungseinheit (20) mit dem Leitungseingang (11) verschaltet ist, und die Versorgungseinheit (20) zumindest ein drittes, magnetisch ansteuerbares Regelventil (22, 23; 25, 26) zur Verbindung oder Trennung der Regulationseinheit (30) mit dem Leitungseingang (11) aufweist.

5. Vorrichtung nach Anspruch 4, **dadurch gekennzeichnet, dass** die Versorgungseinheit (20) zumindest zwei seriell miteinander verschaltete dritte Regelventile (22, 23; 25, 26) umfasst.

6. Vorrichtung nach Anspruch 4 oder 5, **dadurch gekennzeichnet, dass** die Reguliereinheit (30) einen ersten Ventilstrang (31) und zumindest einen zweiten, dazu parallel geschalteten Ventilstrang (35) mit jeweils den ersten und zweiten Regelventilen (32, 38; 22, 23, 33, 34; 26, 27, 36, 37) aufweist.

7. Vorrichtung nach einem der Ansprüche 4 bis 6, **dadurch gekennzeichnet, dass** die Versorgungseinheit (20) einen dritten Ventilstrang (21) und zumindest einen vierten, dazu parallel geschalteten Ventilstrang (25) mit jeweils den dritten Regelventilen (22, 23; 26, 27) aufweist.

8. Vorrichtung nach einem der vorhergehenden Ansprüche, **dadurch gekennzeichnet, dass** das erste und die zumindest zwei zweiten Regelventile (32, 38; 22, 23, 33, 34; 26, 27, 36, 37) durch eine Steuereinheit (40) ansteuerbar sind.

9. Vorrichtung nach Anspruch 8, **dadurch gekennzeichnet, dass** der Steuereinheit (40) zur Steuerung der Regelventile der Vorrichtung Soll- und Messwerte des Drucks und/oder des Massenstroms des Fluids zuführbar sind.

## Claims

1. Device for controlling the pressure and/or mass flow of a gaseous or liquid fluid which is conveyable through a conduit, in particular for a space propulsion system, wherein a combination of a first, piezoelectrically actuatable control valve (32; 38) and at least two second, magnetically actuatable control valves (22, 23, 33, 34; 26, 27, 36, 37) is provided for controlling the pressure and/or mass flow of the fluid, wherein the control valves (32, 38; 22, 23, 33, 34; 26, 27, 36, 37) are connected to one another and to a line input (11) in such a way that in a nominal operation the pressure and the mass flow of the fluid through the at least one first control valve is adjustable and a connection or insulation of the first control valve (32; 38) to or from the line input (11) through the second control valves (22, 23, 33, 34; 26, 27, 36, 37) is establishable, and wherein in an emergency operation the pressure and the mass flow of the fluid is adjustable through the second control valves.

2. Device according to claim 1, **characterized in that** one of the second control valves (22, 23, 33, 34; 26, 27, 36, 37) is connected in series with the first control valve (32, 38) between the line input (11) and the control valve (32, 38) and another of the second control valves (22, 23, 33, 34; 26, 27, 36, 37) is connected in parallel with the first control valve (32; 38).

3. Device according to claim 1, **characterized in that** one of the second control valves (22, 23, 33, 34; 26, 27, 36, 37) is connected in series with the first control valve (32, 38) between the line input (11) and the control valve (32, 38) and another of the second control valves (22, 23, 33, 34) is connected in series with the first control valve (32, 38); 26, 27, 36, 37) is connected in parallel with the series connection of the first control valve (32; 38) and the one of the second control valves (22, 23, 33, 34; 26, 27, 36, 37).

4. Device according to one of the preceding claims, **characterized in that** the first and the at least two second control valves (32, 38; 22, 23, 33, 34; 26, 27, 36, 37) are assigned to a regulation unit (30), the regulation unit (30) being connected to the line input (11) via a supply unit (20), and the supply unit (20) having at least one third, magnetically controllable control valve (22, 23; 25, 26) for connecting or disconnecting the regulation unit (30) to/from the line input (11).

5. Device according to Claim 4, **characterized in that** the supply unit (20) comprises at least two third control valves (22, 23; 25, 26) connected in series with one another.

6. Device according to Claim 4 or 5, **characterized in that** the regulating unit (30) comprises a first valve train (31) and at least one second valve train (35) connected in parallel therewith, each comprising the first and second regulating valves (32, 38; 22, 23, 33, 34; 26, 27, 36, 37).

7. Device according to one of claims 4 to 6, **characterized in that** the supply unit (20) comprises a third valve train (21) and at least one fourth valve train (25) connected in parallel therewith, each comprising the third control valves (22, 23; 26, 27).

8. Device according to one of the preceding claims, **characterized in that** the first and at least two second control valves (32, 38; 22, 23, 33, 34; 26, 27, 36, 37) are controllable by a control unit (40).

9. Device according to claim 8, **characterized in that** set values and measured values of the pressure and/or the mass flow of the fluid are supplyable to the control unit (40) for controlling the control valves of the device.

## Revendications

1. Dispositif de commande de pression et/ou de débit massique d'un fluide gazeux ou liquide pouvant être transporté à travers une conduite, en particulier pour un moteur-fusée, dans lequel une combinaison d'une première vanne de réglage à commande piézoélectrique (32 ; 38) et d'au moins deux deuxièmes vannes de réglage à commande magnétique (22, 23, 33, 34 ; 26, 27, 36, 37) est prévue pour la commande de pression et/ou de débit massique du fluide, dans lequel les vannes de réglage (22, 23, 33, 34 ; 26, 27, 36, 37) sont interconnectées entre elles et avec une entrée de conduite (11) de telle sorte qu'en cours de fonctionnement nominal, la pression et le débit massique du fluide peuvent être ajustés par ladite au moins une première vanne de réglage et une connexion ou isolation de la première vanne de réglage (32 ; 38) à/de l'entrée de conduite (11) peut être établie par les deuxièmes vannes de réglage (22, 23, 33, 34 ; 26, 27, 36, 37), et dans lequel en régime de secours, la pression et le débit massique du fluide peuvent être ajustés par les deuxièmes vannes de réglage.

2. Dispositif selon la revendication 1, **caractérisé en ce que** l'une des deuxièmes vannes de réglage (22, 23, 33, 34 ; 26, 27, 36, 37) est interconnectée en série avec la première vanne de réglage (32, 38) entre l'entrée de conduite (11) et la vanne de réglage (32, 38), et une autre des deuxièmes vannes de réglage (22, 23, 33, 34 ; 26, 27, 36, 37) est interconnectée en parallèle à la première vanne de réglage (32 ; 38).

3. Dispositif selon la revendication 1, **caractérisé en ce que** l'une des deuxièmes vannes de réglage (22, 23, 33, 34 ; 26, 27, 36, 37) est interconnectée en série avec la première vanne de réglage (32, 38) entre l'entrée de conduite (11) et la vanne de réglage (32, 38), et une autre des deuxièmes vannes de réglage (22, 23, 33, 34 ; 26, 27, 36, 37) est interconnectée en parallèle à la connexion en série composée de la première vanne de réglage (32 ; 38) et de ladite une des deuxièmes vannes de réglage (22, 23, 33, 34 ; 26, 27, 36, 37).

4. Dispositif selon l'une quelconque des revendications précédentes, **caractérisé en ce que** la première et lesdites au moins deux deuxièmes vannes de réglage (22, 23, 33, 34 ; 26, 27, 36, 37) sont attribuées à une unité de régulation (30), l'unité de régulation (30) étant interconnectée par l'intermédiaire d'une unité d'alimentation (20) avec l'entrée de conduite (11), et l'unité d'alimentation présente au moins une troisième vanne de réglage à commande magnétique (22, 23 ; 25, 26) pour connecter ou déconnecter l'unité de régulation (30) à/de l'entrée de conduite (11).

5. Dispositif selon la revendication 4, **caractérisé en ce que** l'unité d'alimentation (20) comprend au moins deux troisièmes vannes de réglage (22, 23 ; 25, 26) interconnectées en série.

6. Dispositif selon la revendication 4 ou 5, **caractérisé en ce que** l'unité de régulation (30) présente un premier système de vannes (31) et au moins un deuxième système de vannes (35) connecté en parallèle à celui-ci avec respectivement les premières et deuxièmes vannes de réglage (32, 38 ; 22, 23, 33, 34 ; 26, 27, 36, 37).

7. Dispositif selon l'une quelconque des revendications 4 à 6, **caractérisé en ce que** l'unité d'alimentation (20) présente un troisième système de vannes (21) et au moins un quatrième système de vannes (25) connecté en parallèle à celui-ci avec respectivement les troisièmes vannes de réglage (22, 23 ; 26, 27).

8. Dispositif selon l'une quelconque des revendications précédentes, **caractérisé en ce que** la première et lesdites au moins deux deuxièmes vannes de réglage (32, 38 ; 22, 23, 33, 34 ; 26, 27, 36, 37) peuvent être commandées par une unité de commande (40).

9. Dispositif selon la revendication 8, **caractérisé en ce que** des valeurs de consigne et de mesure de la pression et/ou du débit massique du fluide peuvent être amenées à l'unité de commande (40) pour commander les vannes de réglage.
